# EUROPÄISCHE PATENTSCHRIFT

(11) **EP 3 728 898 B1**
(45) Veröffentlichungstag und Bekanntmachung des Hinweises auf die Patenterteilung: **17.11.2021**
(21) Anmeldenummer: 18830451.3
(22) Anmeldetag: 18.12.2018
(51) Int. Cl.: F16H 1/16, F16H 55/02, B62D 5/04, F16H 55/06

(54) **SCHNECKENRAD FÜR EIN SCHNECKENRADGETRIEBE EINER KRAFTFAHRZEUGLENKUNG MIT EINEM EINGESPRITZTEN TRÄGERRING**
WORM GEAR FOR A WORM GEAR SYSTEM IN A MOTOR VEHICLE STEERING DEVICE HAVING AN INJECTION-MOULDED SUPPORT RING
ROUE À VIS SANS FIN POUR UNE TRANSMISSION DE ROUE À VIS SANS FIN D'UNE DIRECTION DE VÉHICULE AUTOMOBILE COMPRENANT UNE BAGUE DE SUPPORT INJECTÉE

(30) Priorität: 22.12.2017 DE 102017131180
(43) Veröffentlichungstag der Anmeldung: 28.10.2020
(73) Patentinhaber: thyssenkrupp Presta AG, 9492 Eschen (LI); thyssenkrupp AG, 45143 Essen (DE)
(72) Erfinder: ERNSTSON, Gernot, 6800 Feldkirch (AT); PETER, Manuel, 8340 Hinwil (CH)
(74) Vertreter: thyssenkrupp Intellectual Property GmbH
(86) Internationale Anmeldenummer: PCT/EP2018/085647
(87) Internationale Veröffentlichungsnummer: WO 2019/121781

(56) Entgegenhaltungen:
- EP-A1- 1 777 439
- DE-A1- 10 326 819
- DE-A1-102012 102 776
- DE-A1-102014 104 949
- DE-A1-102016 223 877

## Beschreibung

Die vorliegende Erfindung betrifft ein Schneckenrad für ein Schneckenradgetriebe einer Kraftfahrzeuglenkung mit den Merkmalen des Oberbegriffs des Anspruchs 1, ein Schneckenradgetriebe für eine Kraftfahrzeuglenkung sowie ein Verfahren zur Herstellung eines Schneckenrades für ein Schneckenradgetriebe einer Kraftfahrzeuglenkung mit den Merkmalen des Oberbegriffs des Anspruchs 12.

Für den Einsatz elektromechanischer Hilfskraftlenkungen werden unter anderem Getriebe benötigt, welche ein Hilfsdrehmoment von einem Elektromotor auf eine Lenkwelle übertragen. Für gewöhnlich treibt der Elektromotor eine Schnecke an, welche mit einem auf der Lenkwelle oder auf einem Ritzel drehfest angeordneten Schneckenrad in Eingriff steht.

Das Schneckenrad umfasst einen Einleger, der mit der Lenkwelle oder mit dem Ritzel drehfest verbindbar ist, wobei dieser Einleger mit einem Kunststoff ergänzt wird. Dieser Kunststoff bildet den sogenannten Zahnkranz aus.

Schneckengetriebe sind stoßartigen Belastungen ausgesetzt, wodurch in einem Normalbetrieb die durch das maximale Drehmoment erzeugten Kräfte an den Zahnflanken zu einer Überbelastung führen. Insbesondere die Zahnflanken reagieren auf diese stoßartigen Belastungen sehr empfindlich.

Aus der Offenlegungsschrift DE 10 2014 104 284 A1 ist ein mehrteiliges Zahnrad bekannt, bei dem ein Verbindungsteil eine Nabe mit einem Zahnkranz verbindet. Dabei umschließt das Verbindungsteil die Zahnkranzverzahnung abschnittsweise im Bereich der Stirnfläche.

Als nachteilig erweist sich diese Lösung dahingehend, dass eine ungleichmäßige Kraftverteilung im Eingriffsbereich zwischen Schnecke und Schneckenrad entsteht, wodurch ein schnelleres Abnutzen des Schneckengetriebes und ein damit schnellerer Verschleiß begünstigt wird. Andere Schneckenräder sind aus EP 1 777 439 A1 bekannt.

Es ist Aufgabe der vorliegenden Erfindung, ein Schneckenrad für ein Schneckenradgetriebe einer Kraftfahrzeuglenkung anzugeben, das mit möglichst einfachen Mitteln eine bessere Kraftverteilung im Eingriff zwischen Schnecke und Schneckenrad und eine höhere Momentübertragung ermöglicht. Diese Aufgabe wird von einem Schneckenrad für ein Schneckenradgetriebe einer Kraftfahrzeuglenkung mit den Merkmalen des Anspruchs 1 und einem Verfahren zur Herstellung eines Schneckenrades für ein Schneckenradgetriebe einer Kraftfahrzeuglenkung mit den Merkmalen des Anspruchs 12 gelöst. Demnach ist ein Schneckenrad für ein Schneckenradgetriebe einer Kraftfahrzeuglenkung umfassend eine Nabe, einen Trägerkörper und einen Zahnkranz vorgesehen, wobei der Trägerkörper ein zwischen den Zahnkranz und der Nabe mittels Spritzgussverfahren eingespritzter Trägerring ist, der die Nabe und den Zahnkranz formschlüssig miteinander verbindet. Der Zahnkranz und der Trägerkörper bilden eine Vielzahl an Zähnen aus, wobei der Trägerkörper Tragestege aufweist, die den Zahnkranz durchsetzen, so dass die radial nach außen zeigenden Stirnseiten der Tragestege offenliegen. Unter dem Begriff "offenliegen" wird hier verstanden, dass die Stirnseiten nicht von dem Zahnkranz bedeckt sind bzw. überragt werden. Die Tragestege verteilen die auf die Verzahnung im Belastungsfall wirkende Kraft. Dadurch wird eine höhere Momentübertragung ermöglicht.

Mit Vorteil entspricht die Höhe der Tragestege des Trägerkörpers der Höhe der Zähne des Zahnkranzes.

Vorzugsweise weist der Zahnkranz Zahnelemente auf, die die Zahnflanken der Zähne ausbilden. Dabei ist es bevorzugt, wenn ein Zahnelement jeweils eine Zahnflanke von zwei benachbarten Zähnen ausbildet. Es ist vorteilhaft, wenn in diesem Fall die Tragestege des Trägerkörpers jeweils zwischen zwei Flanken eines Zahnes angeordnet sind. Die Tragestege liegen somit zwischen zwei Zahnelementen. Ein Zahn des Schneckenrads wird damit durch zwei Zahnelemente und einen Tragesteg gebildet. Die auf die Verzahnung wirkende Kraft wird dabei nicht nur von dem Tragesteg, sondern auch von den beiden daran anschließenden Zahnelementen aufgenommen. Vorzugsweise bildet ein Zahnelement jeweils eine Zahnflanke von zwei benachbarten Zähnen aus.

In einer bevorzugten Ausführungsform erstrecken sich die Tragestege über die im Bereich der Zähne gesamte Breite des Schneckenrades. Die Kraft kann so bestmöglich verteilt werden. Es ist weiterhin denkbar und möglich, dass statt eines die komplette Breite durchsetzenden Tragestegs, ein Tragesteg gebildet wird, welcher nicht die komplette Breite des Zahns aufweist. Weiterhin ist es möglich, dass jeweils zwei Tragestegarme einen Teil der Zahnbreite durchsetzen und jeweils durch einen Spalt voneinander beabstandet sind.

Vorzugsweise weisen die Tragestege eine konstante Breite auf. In eine weiteren vorteilhaften Ausführungsform weisen die Tragestege eine Profilierung oder Hinterschnitte auf, was zu höheren Spannungen führt.

Die Tragestege erstrecken sich bevorzugt von einem ringförmigen Steg des Trägerkörpers in radialer Richtung nach außen.

Vorzugsweise ist der Zahnkranz ein Einkomponenten-Kunststoffteil, der bevorzugt aus einem zähen Material gebildet ist. Der Trägerring ist hingegen vorzugsweise aus einem hochgefüllten, hochorientierten Kunststoff gebildet. Der Zahnkranz und/oder der Trägerring besteht vorzugsweise aus Kunstharz oder einem Thermoplast, insbesondere aus Polyamid, Polyacetal, gesättigtem Polyester, Polyether, und/oder Etherketon oder weist Verstärkungsfasern oder einen faserverstärkten Kunststoff auf.

Bevorzugt weist das Einlegeteil Einspritzlöcher auf, die zum Einspritzen eines Kunststoffs zur Ausbildung des Trägerrings ausgebildet sind.

Der Trägerring weist vorzugsweise Hinterschnitte auf, die ein Verklemmen des Trägerringes mit dem Zahnkranzes bei der Herstellung erlauben.

Es ist weiterhin ein Schneckenradgetriebe für eine Kraftfahrzeuglenkung mit einem zuvor beschriebenen Schneckenrad und mit einer mit dem Schneckenrad in Eingriff stehenden Schnecke vorgesehen.

Zudem ist ein Verfahren zur Herstellung eines Schneckenrades für ein Schneckenradgetriebe einer Kraftfahrzeuglenkung umfassend eine Nabe, einen Trägerkörper und einen Zahnkranz vorgesehen, das folgende Schritte aufweist:
- Bereitstellen der Nabe in Form eines Einlegeteils;
- Einsetzen des Einlegeteils in den Zahnkranz;
- Einspritzen eines Kunststoffes zwischen den Zahnkranz und dem Einlegeteil mittels eines Spritzgussverfahrens zur Ausbildung des Trägerkörpers und zwar derart, dass der Trägerkörper in Form eines Trägerringes die Nabe und den Zahnkranz formschlüssig verbindet, wobei der Zahnkranz und der Trägerkörper eine Vielzahl an Zähnen ausbilden und der Trägerkörper Tragestege aufweist, die den Zahnkranz durchsetzen, so dass die radial nach außen zeigenden Stirnseiten der Tragestege offenliegen.

Der Zahnkranz ist bevorzugt derart ausgebildet, dass im ausgehärteten Zustand der Trägerring Hinterschnitte aufweist, die ein Verklemmen des Trägerrings mit dem Zahnkranz bei der Herstellung erlauben.

Vorzugsweise weist der Zahnkranz Zahnelemente auf, die die Zahnflanken der Zähne ausbilden. Dabei ist es bevorzugt, wenn ein Zahnelement jeweils eine Zahnflanke von zwei benachbarten Zähnen ausbildet. Es ist vorteilhaft, wenn in diesem Fall die Tragestege des Trägerkörpers jeweils zwischen zwei Flanken eines Zahnes angeordnet sind. Die Tragestege liegen somit zwischen zwei Zahnelementen. Die auf die Verzahnung wirkende Kraft wird dabei nicht nur von dem Tragesteg, sondern auch von den beiden daran anschließenden Zahnelementen aufgenommen.

In einer bevorzugten Ausführungsform erstrecken sich die Tragestege über die im Bereich der Zähne gesamte Breite des Schneckenrades, d. h. die Tragestege haben die gleiche Breite in Richtung der Längsachse des Schneckenrades wie die Zahnflanken bzw. Zahnelemente. Die Kraft kann so bestmöglich verteilt werden.

Vorzugsweise weisen die Tragestege eine konstante Breite auf.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung einer elektromechanischen Kraftfahrzeuglenkung,
- Fig. 2:: einen Querschnitt durch ein Schneckenradgetriebe,
- Fig. 3:: eine räumliche Ansicht eines Schneckenrades,
- Fig. 4:: eine Explosionszeichnung des Schneckenrades,
- Fig. 5:: eine vergrößerte Darstellung eines Trägerringes des Schneckenrades,
- Fig. 6:: eine vergrößerte Darstellung eines Zahnkranzes des Schneckenrades,
- Fig. 7:: eine räumliche Ansicht des Schneckenrades ohne Trägerring,
- Fig. 8:: eine Ansicht von oben auf das Schneckenrad,
- Fig. 9:: einen Querschnitt durch das Schneckenrad entlang der Linie A-A,
- Fig. 10:: einen Längsschnitt durch das Schneckenrad entlang der Linie B-B,
- Fig. 11:: einen Schnitt durch das Schneckenrad entlang der Linie D-D, sowie
- Fig. 12:: einen Schnitt durch das Schneckenrad entlang der Linie F-F.

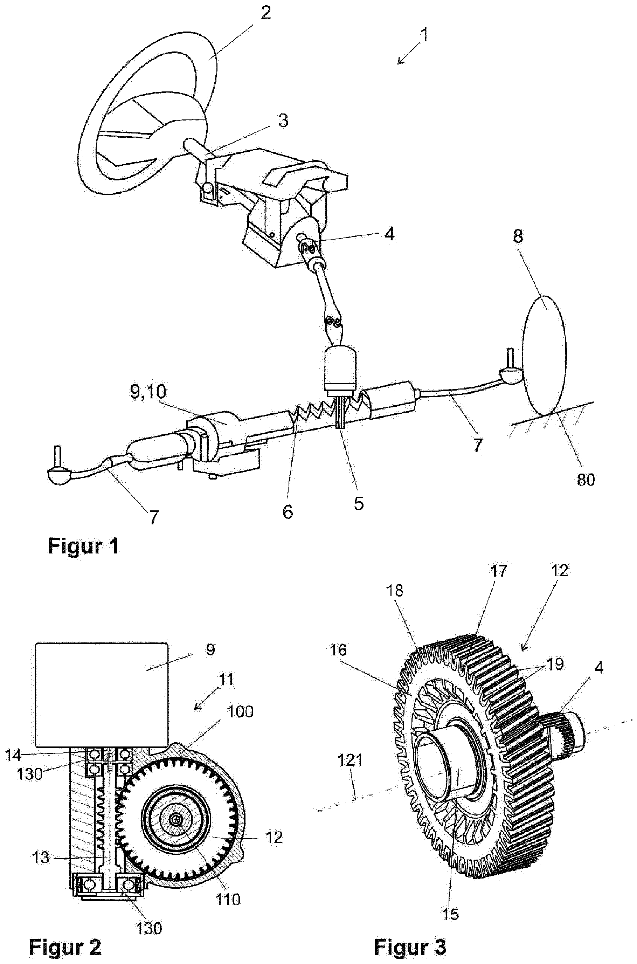

In der Figur 1 ist eine elektromechanische Kraftfahrzeuglenkung 1 mit einem Lenkrad 2, das mit einer oberen Lenkwelle 3 und einer unteren Lenkwelle 4 drehfest gekoppelt ist, schematisch dargestellt. Die obere Lenkwelle 3 steht über einen Torsionsstab 110 in funktioneller Verbindung mit der unteren Lenkwelle 4. Die obere Lenkwelle 3 ist mit dem Lenkrad unmittelbar drehfest verbunden. Die untere Lenkwelle 4 weist entlang ihrer Schneckenradlängsachse 121 eine partielle Verzahnung zum formschlüssigen Eingriff mit einer Gelenkanordnung auf, welche wiederrum über eine Welle mit einem Lenkgetriebe verbunden ist. Die untere Lenkwelle 4 ist mit einem Ritzel 5 drehfest verbunden. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um dem Fahrer bei dieser Lenkbewegung zu unterstützen. Die Servoeinheit 10 kann dabei als Überlagerungslenkung an der Lenksäule oder als Hilfskraftunterstützungseinrichtung an dem Ritzel 5 oder der Zahnstange 6 angeordnet sein.

Figur 2 zeigt ein in einem Gehäuse 100 angeordnetes Schneckengetriebe 11. Ein Schneckenrad 12 ist vorgesehen, welches beispielsweise mit der Lenkwelle 4 drehfest verbunden ist. Das Schneckenrad 12 wird über eine Schnecke 13 angetrieben, welche ihrerseits über den Elektromotor 9 angetrieben ist, wobei der Abtrieb 14 des Elektromotors 9 entsprechend zur Drehmomentübertragung mit der Schnecke 13 gekoppelt ist. Die Schnecke 13 ist an ihren beiden Enden über ein Wälzlager 130 im Gehäuse 100 radial abgestützt und ermöglicht einen Winkelausgleich.

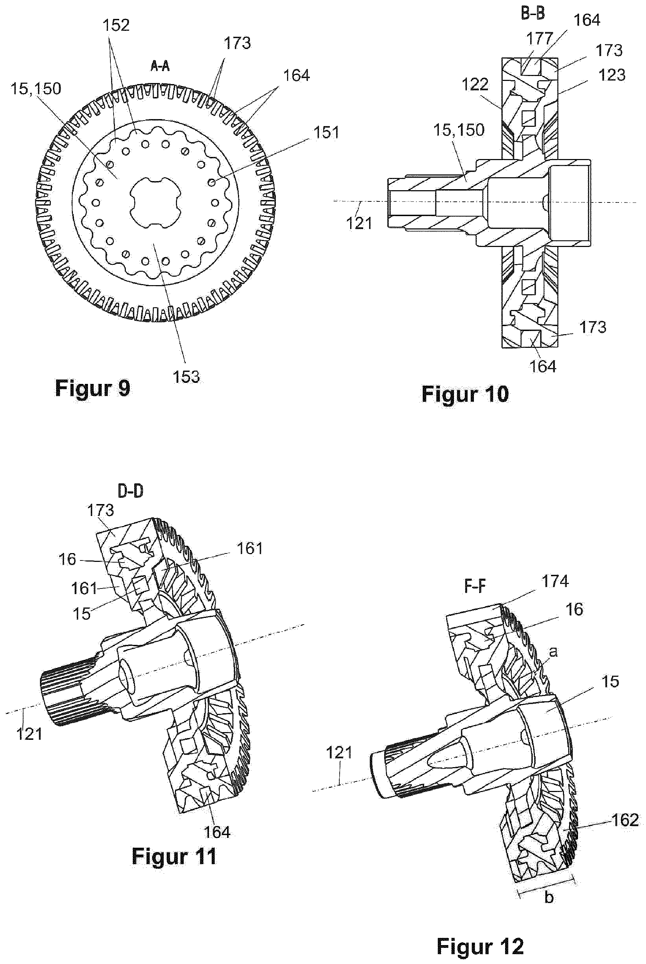

In der Figur 3 ist das Schneckenrad 12 aufweisend eine Nabe 15, einen Trägerring 16 und einen den Trägerring 16 umgebenden Zahnkranz 17 entlang der Schneckenradlängsachse 121 dargestellt. Dabei ist die Nabe 15 einteilig mit der Ausgangswelle 4 ausgebildet und weist an ihrem einen Ende eine Verzahnung für die formschlüssige Verbindung mit der Gelenkanordnung auf und ist andererseits in Richtung der Eingangswelle 3 hin geöffnet, sodass darin der Torsionsstab 110 eingeführt werden kann. Der Torsionsstab 110 kann auch durch das Ende, an welchem die Gelenkanordnung vorgesehen ist, in die Ausgangswelle 4 eingeführt werden. Die Ausgangswelle hat, wie in Figur 9 dargestellt, eine kleeblattförmige Innenkontur, um darin eine Welle mit einer entsprechenden Aussenkontur aufzunehmen.

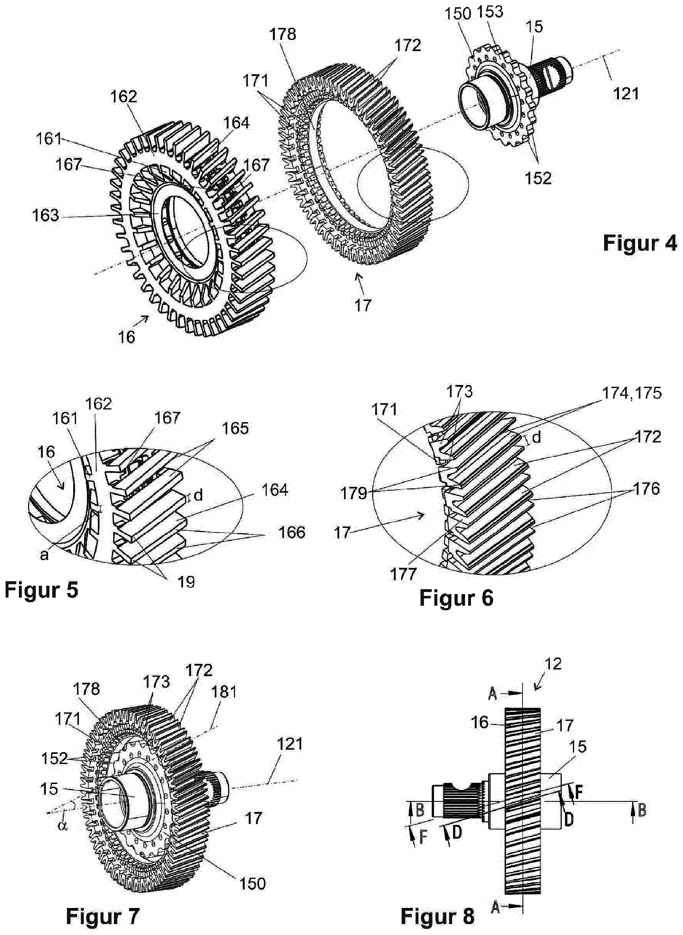

Wie in den Figuren 4 bis 7 gezeigt ist, bildet ein Einlegeteil 150 die Nabe 15 aus. Das Einlegeteil 15 ist vorzugsweise aus Metall, insbesondere Stahl, gefertigt. Das Einlegeteil 150 weist einen Zahnkranz 153 mit einer Verzahnung 152 auf, welche bezogen auf die Schneckenradlängsachse 121 radial nach außen gerichtet ist. Dabei ist zwischen zwei Vorsprüngen oder Zähnen 152 des Zahnkranzes 153 je ein Einspritzloch 151 vorgesehen. Gemäss dieser Ausführungsform entspricht das Verhältnis zwischen den Vorsprüngen 152 des Zahnkranzes 153 und den Einspritzlöchern 151 des Kunststoffzahnkranzes 17 einem Verhältnis von 1:2. Oder anders ausgedrückt: Zwischen jeder zweiten Vertiefung, welche zwischen zwei Zahnkranzzähnen 152 gebildet ist, ist je ein Einspritzloch 151 vorgesehen. Der Zahnkranz 17 ist ein Einkomponenten-Kunststoffteil. Vorzugsweise besteht der Zahnkranz 17 aus einem zähen, nicht mit Glasfaser gefülltem Material.

Der Trägerring 16 verbindet das Einlegeteil 15 mit dem Zahnkranz 17. Der Trägerring 16 weist auf beiden Stirnseiten 122, 123 Verstärkungsrippen 161 auf, die sich radial von einem ringförmigen Steg 162 aus, in Richtung eines Befestigungsbereichs 163 mit dem Einlegeteil 15 erstrecken. Die Verstärkungsrippen haben eine konstante Breite a. Die Verstärkungsrippen 161 ragen seitlich aus dem Grundkörper des Trägerrings 16 hervor, überragen jedoch nicht die Breite b des Schneckenrads im Bereich der Verzahnung 18. Gegenüberliegend zu den Verstärkungsrippen und in Richtung der Zähne 18 kann entlang des ringförmiges Stegs 162 eine Kontur mit Vorsprüngen und Vertiefungen vorgesehen sein, in welche während des Spritzgiessens die Schmelze aufhält und den Trägerring 16 so füllt, sodass eine definierte Faserorientierung ermöglicht werden kann. Ausgehend von dem ringförmigen Steg 162 weist der Trägerring 16 sich radial nach außen erstreckende Tragestege 164 auf, die jeweils einen Teil eines Zahnes 18 des Schneckenrades 12 bilden. Die Tragestege 164 weisen eine im Wesentlichen gleichbleibende Wandstärke d auf. Die sich gegenüberliegenden, innenliegenden Seiten 165 der Tragestege 164 liegen in Anlage mit einem entsprechenden Gegenstück des Zahnkranzes 17. Die radial nach außen zeigenden Stirnseiten 166 der Tragestege 164 werden dabei nicht von dem Zahnkranz 17 verdeckt und bilden den Zahnkopf 19 der Zähne 18 aus. Der Trägerring 16 ist vorzugsweise aus einem hochgefüllten, hochorientierten Kunststoff gebildet. Ausgehend von dem ringförmigen Steg 162 am Zahnfuss des Trägerrings 16 sind einander axial gegenüberliegende Verbindungselemente 167 vorgesehen, welche mit einer Verbindungsstruktur 171 des Zahnkranzes 17 korrespondieren und mit diesem einen Formschluss bilden.

Der Zahnkranz 17 weist auf seiner inneren Umfangsfläche und in Richtung des Einlegeteils 15 einen Verbindungsvorsprung 178 auf, entlang welchem sich auf beiden Stirnseiten des Zahnkranzes 17 und entlang des gesamten Umfangs eine einreihige oder mehrreihige Verbindestruktur 171 verteilt. Die Verbindestruktur hat, wie in Figur 4 dargestellt, eine geringere Breite als die Zahnkranzverzahnung und greift formschlüssig in die Verbindungselemente 167 des Trägerrings ein. An die Verbindestruktur 171 schließen sich auf der sich über den Umfang erstreckenden Außenseite, sich radial nach außen erstreckende Zahnelemente 172 an, die bevorzugt v-oder U-förmig mit zwei Schenkeln 173 ausgebildet sind. Die Schenkel 173 haben im Bereich der Stirnseiten 166 des Tragestegs radial nach außen zeigende Stirnseiten 179, sodass die Stirnseiten 166,179 gemeinsam den Zahnkopf 19 der Zähne 18 ausbilden. Die beiden Schenkel 173 der Zahnelemente 172 bilden dabei jeweils eine Zahnflanke 174 von zwei aufeinanderfolgenden Zähnen 18 aus. Die Zahnflanken 174 weisen die Kontaktflächen 175 des Eingriffs mit der Schnecke auf. In Umfangsrichtung zwischen den Zahnelementen 172 sind zu den Tragestegen 164 des Trägerringes 16 korrespondierende Ausnehmungen 176 vorgesehen. Die Ausnehmungen 176 haben folglich einen Abstand b, sodass die Tragestege 164 des Trägerrings darin aufgenommen werden können. Die Außenseiten 177 der Zahnelemente 172 erstrecken sich daher im Wesentlichen in radialer Richtung.

Wie in Figur 7 gezeigt, schließen die Längsachsen 181 der Zahnelemente 172 bzw. der Zähne mit der Längsachse 121 des Schneckenrades 12 einen Winkel α ein. Der Winkel α liegt bevorzugt in einem Bereich zwischen 13° und 20°, besonders bevorzugt liegt der Winkel bei 15,5°.

Die Figuren 8 bis 12 zeigen im Detail das fertig gestellte Schneckenrad 12. Figur 11 zeigt einen Schnitt durch eine Zahnflanke des Zahnelementes des Zahnrades 17 des Schneckenrades. In der Figur 12 ist ein Schnitt durch das Schneckenrad im Bereich zwischen den Zahnflanken von zwei aufeinanderfolgenden Zähnen dargestellt.

Der Zahnkranz 17 wird bevorzugt in einem Schirmanguss gefertigt. So lassen sich Fliess- oder Bindemarkierungen vermeiden. In einem zweiten Herstellungsschritt wird der Zahnkranz 17 auf dem Einlegeteil 150 positioniert. Der Trägerring 16 wird in einem Spritzgussverfahren zwischen das Einlegeteil 150 und dem Zahnkranz 17 gespritzt. Dazu weist das Einlegeteil 150 Einspritzlöcher 151 auf, in welche ein Kunststoff zur Ausbildung des Trägerrings 16 eingespritzt wird. Die zwischen den Zahnelementen 173 vorhandenen Spalte bzw. Ausnehmungen 176 werden durch das Einspritzen des Trägerringes 16 geschlossen. Der Trägerring 16 reicht somit bis zur Verzahnung des Schneckenrades. Die dadurch gebildeten Tragestege 164 erstrecken sich durchgehend von einer Stirnseite 122 des Schneckenrades 12 bis zur anderen Stirnseite 123, über die gesamte Breite b des Schneckenrades 12. Das Bauteil erlangt so eine sehr hohe Steifigkeit. Der durch Spritzguss gebildete Trägerring 16 ermöglicht einen Formschluss zwischen Zahnkranz 17 und Einlegeteil 150. Er ist eine hochsteife tragfähige Struktur, die wirtschaftlich hergestellt werden kann. Durch die unterschiedliche Materialwahl des Trägerringes 17 und des Zahnrades 16 wird ein Schneckenrad 12 mit guten Kontakteigenschaften im Eingriff mit der Schnecke und einer guten Tragestruktur geschaffen.

## Patentansprüche

1. Schneckenrad (12) für ein Schneckenradgetriebe (11) einer Kraftfahrzeuglenkung umfassend eine Nabe (15), einen Trägerkörper (16) und einen Zahnkranz (17), wobei der Trägerkörper (16) ein zwischen dem Zahnkranz (17) und der Nabe (15) mittels Spritzgussverfahren eingespritzter Trägerring ist, der die Nabe (15) und den Zahnkranz (17) formschlüssig miteinander verbindet, wobei der Zahnkranz (17) und der Trägerkörper (16) eine Vielzahl an Zähnen (18) ausbilden und **dadurch gekennzeichnet, dass** der Trägerkörper (16) Tragestege (164) aufweist, die den Zahnkranz (17) durchsetzen, so dass die radial nach außen zeigenden Stirnseiten (166) der Tragestege (164) offenliegen.

2. Schneckenrad nach Anspruch 1, **dadurch gekennzeichnet, dass** der Zahnkranz (17) Zahnelemente (172) aufweist, die Zahnflanken (174) der Zähne (18) ausbilden.

3. Schneckenrad nach Anspruch 2, **dadurch gekennzeichnet, dass** ein Zahnelement (172) jeweils eine Zahnflanke (174) von zwei benachbarten Zähnen (18) ausbildet.

4. Schneckenrad nach Anspruch 3, **dadurch gekennzeichnet, dass** die Tragestege (164) des Trägerkörpers (16) jeweils zwischen zwei Flanken (174) eines Zahnes (18) angeordnet sind.

5. Schneckenrad nach einem der vorhergehenden Ansprüche, **dadurch gekennzeichnet, dass** die Tragestege (164) sich über die im Bereich der Zähne gesamte Breite (d) des Schneckenrades (12) erstrecken.

6. Schneckenrad nach einem der vorhergehenden Ansprüche, **dadurch gekennzeichnet, dass** die Tragestege (164) eine konstante Breite (b) aufweisen.

7. Schneckenrad nach einem der vorhergehenden Ansprüche, **dadurch gekennzeichnet, dass** die Tragestege (164) sich von einem ringförmigen Steg (162) des Trägerkörpers (16) in radialer Richtung nach außen erstrecken.

8. Schneckenrad nach einem der vorhergehenden Ansprüche, **dadurch gekennzeichnet, dass** der Zahnkranz (17) ein Einkomponenten-Kunststoffteil ist.

9. Schneckenrad nach einem der vorhergehenden Ansprüche, **dadurch gekennzeichnet, dass** das Einlegeteil (150) Einspritzlöcher (151) aufweist, die zum Einspritzen eines Kunststoffs zur Ausbildung des Trägerrings (16) ausgebildet sind.

10. Schneckenrad nach einem der vorhergehenden Ansprüche, **dadurch gekennzeichnet, dass** der Trägerring (16) Hinterschnitte aufweist, die ein Verklemmen des Trägerrings (16) mit dem Zahnkranz (17) bei der Herstellung erlauben.

11. Schneckenradgetriebe (11) für eine Kraftfahrzeuglenkung, mit einem Schneckenrad (12) nach einem der Ansprüche 1 bis 10 und einer mit dem Schneckenrad (12) in Eingriff stehenden Schnecke (13).

12. Verfahren zur Herstellung eines Schneckenrades (12) für ein Schneckenradgetriebe (11) einer Kraftfahrzeuglenkung (1) umfassend eine Nabe (15), einen Trägerkörper (16) und einen Zahnkranz (17), das Verfahren weist folgende Schritte auf:
• Bereitstellen der Nabe (15) in Form eines Einlegeteils (150);
• Einsetzen des Einlegeteils (150) in den Zahnkranz (17);
• Einspritzen eines Kunststoffes zwischen den Zahnkranz (17) und dem Einlegeteil (150) mittels eines Spritzgussverfahrens zur Ausbildung des Trägerkörpers (16) und zwar derart, dass der Trägerkörper (16) in Form eines Trägerringes die Nabe (15) und den Zahnkranz (17) formschlüssig verbindet, wobei der Zahnkranz (17) und der Trägerkörper (16) eine Vielzahl an Zähnen (18) ausbilden und der Trägerkörper (16) Tragestege (164) aufweist, die den Zahnkranz (17) durchsetzen, so dass die radial nach außen zeigenden Stirnseiten (166) der Tragestege (164) offenliegen.

13. Verfahren nach Anspruch 12, **dadurch gekennzeichnet, dass** der Zahnkranz (17) derart ausgebildet ist, dass im ausgehärteten Zustand der Trägerring (16) Hinterschnitte aufweist, die ein Verklemmen des Trägerrings (16) mit dem Zahnkranz (17) bei der Herstellung erlauben.

14. Verfahren nach Anspruch 12 oder 13, **dadurch gekennzeichnet, dass** der Zahnkranz (17) Zahnelemente (172) aufweist, die Zahnflanken (174) der Zähne (18) ausbilden.

15. Verfahren nach Anspruch 14, **dadurch gekennzeichnet, dass** ein Zahnelement (172) jeweils eine Zahnflanke (174) von zwei benachbarten Zähnen ausbildet.

16. Verfahren nach Anspruch 14 oder 15, **dadurch gekennzeichnet, dass** die Tragestege (164) des Trägerkörpers (16) jeweils zwischen zwei Flanken eines Zahnes (18) angeordnet sind.

17. Verfahren nach einem der vorhergehenden Ansprüche 12 bis 16, **dadurch gekennzeichnet, dass** die Tragestege (164) sich über die im Bereich der Zähne gesamte Breite (d) des Schneckenrades (12) erstrecken.

18. Verfahren nach einem der vorhergehenden Ansprüche 12 bis 17, **dadurch gekennzeichnet, dass** die Tragestege (164) eine konstante Breite (b) aufweisen.

## Claims

1. A worm gear (12) for a worm gear system (11) of a motor vehicle steering device, comprising a hub (15), a support element (16) and a gear rim (17), wherein the support element (16) is a support ring which by means of an injection-molding method is injected between the gear rim (17) and the hub (15) and which connects in a form-fitting manner the hub (15) and the gear rim (17), wherein the gear rim (17) and the support element (16) configure a multiplicity of teeth (18) and **characterized in that** the support element (16) has support webs (164) which penetrate the gear rim (17) such that the radially outward pointing end sides (166) of the support webs (164) are exposed.

2. The worm gear as claimed in claim 1, **characterized in that** the gear rim (17) has tooth elements (172) which configure tooth flanks (174) of the teeth (18).

3. The worm gear as claimed in claim 2, **characterized in that** one tooth element (172) configures in each case one tooth flank (174) of two neighboring teeth (18).

4. The worm gear as claimed in claim 3, **characterized in that** the support webs (164) of the support element (16) are in each case disposed between two flanks (174) of one tooth (18).

5. The worm gear as claimed in one of the preceding claims, **characterized in that** the support webs (164) extend across the entire width (d) of the worm gear (12) in the region of the teeth.

6. The worm gear as claimed in one of the preceding claims, **characterized in that** the support webs (165) have a consistent width (b).

7. The worm gear as claimed in one of the preceding claims, **characterized in that** the support webs (164) from an annular web (162) of the support element (16) extend in a radially outward direction.

8. The worm gear as claimed in one of the preceding claims, **characterized in that** the gear rim (17) is a single-component plastics material part.

9. The worm gear as claimed in one of the preceding claims, **characterized in that** the insert part (150) has injection bores (151) which are configured for injecting a plastics material for configuring the support ring (16).

10. The worm gear as claimed in one of the preceding claims, **characterized in that** the support ring (16) has undercuts which in the production permit jamming between the support ring (16) and the gear rim (17).

11. A worm gear system (11) for a motor vehicle steering device, having a worm gear (12) as claimed in one of claims 1 to 10 and having a worm (13) which engages with the worm gear (12).

12. A method for producing a worm gear (12) for a worm gear system (11) of a motor vehicle steering device (1), comprising a hub (15), a support element (16), and a gear rim (17), the method comprising the following steps:
• providing the hub (15) in the form of an insert part (150);
• inserting the insert part (150) into the gear rim (17);
• injecting a plastics material between the gear rim (17) and the insert part (150) by means of an injection-molding method so as to configure the support element (16) specifically in such a manner that the support element (16) in the form of a support ring connects in a form-fitting manner the hub (15) and the gear rim (17), wherein the gear rim (17) and the support element (16) configure a multiplicity of teeth (18) and the support element (16) has support webs (164) which penetrate the gear rim (17) such that the radially outward pointing end sides (166) of the support webs (164) are exposed.

13. The method as claimed in claim 12, **characterized in that** the gear rim (17) is configured in such a way that the support ring (16) in the cured state has undercuts which in the production permit jamming between the support ring (16) and the gear rim (17).

14. The method as claimed in claim 12 or 13, **characterized in that** the gear rim (17) has tooth elements (172) which configure tooth flanks (174) of the teeth (18).

15. The method as claimed in claim 14, **characterized in that** one tooth element (172) configures in each case one tooth flank (174) of two neighboring teeth.

16. The method as claimed in claim 14 or 15, **characterized in that** the support webs (164) of the support element (16) are in each case disposed between two flanks of one tooth (18).

17. The method as claimed in one of preceding claims 12 to 16, **characterized in that** the support webs (164) extend across the entire width (d) of the worm gear (12) in the region of the teeth.

18. The method as claimed in one of preceding claims 12 to 17, **characterized in that** the support webs (164) have a consistent width (b).

## Revendications

1. Roue à vis sans fin (12) pour un engrenage à vis sans fin (11) d'une direction de véhicule automobile, comprenant un moyeu (15), un corps de support (16) et une couronne dentée (17), le corps de support (16) étant une bague de support moulée par injection entre la couronne dentée (17) et le moyeu (15) au moyen d'un procédé de moulage par injection qui relie par complémentarité de forme le moyeu (15) et la couronne dentée (17) l'un à l'autre, la couronne dentée (17) et le corps de support (16) réalisant une pluralité de dents (18), et
**caractérisée en ce que** le corps de support (16) présente des nervures porteuses (164) qui traversent la couronne dentée (17) de sorte que les faces frontales (166), orientées radialement vers l'extérieur, des nervures porteuses (164) sont exposées.

2. Roue à vis sans fin selon la revendication 1, **caractérisée en ce que** la couronne dentée (17) présente des éléments de dent (172) qui réalisent des flancs de dent (174) des dents (18).

3. Roue à vis sans fin selon la revendication 2, **caractérisée en ce qu'**un élément de dent (172) réalise respectivement un flanc de dent (174) de deux dents voisines (18).

4. Roue à vis sans fin selon la revendication 3, **caractérisée en ce que** les nervures porteuses (164) du corps de support (16) sont disposées respectivement entre deux flancs (174) d'une dent (18).

5. Roue à vis sans fin selon l'une quelconque des revendications précédentes, **caractérisée en ce que** les nervures porteuses (164) s'étendent sur toute la largeur (d) de la roue à vis sans fin (12) dans la zone des dents.

6. Roue à vis sans fin selon l'une quelconque des revendications précédentes, **caractérisée en ce que** les nervures porteuses (164) présentent une largeur constante (b) .

7. Roue à vis sans fin selon l'une quelconque des revendications précédentes, **caractérisée en ce que** les nervures porteuses (164) s'étendent d'une nervure annulaire (162) du corps de support (16) dans la direction radiale vers l'extérieur.

8. Roue à vis sans fin selon l'une quelconque des revendications précédentes, **caractérisée en ce que** la couronne dentée (17) est une pièce en matière plastique monocomposant.

9. Roue à vis sans fin selon l'une quelconque des revendications précédentes, **caractérisée en ce que** la pièce d'insertion (150) présente des trous d'injection (151) qui sont réalisés pour injecter une matière plastique afin de réaliser la bague de support (16).

10. Roue à vis sans fin selon l'une quelconque des revendications précédentes, **caractérisée en ce que** la bague de support (16) présente des contre-dépouilles qui permettent un calage de la bague de support (16) avec la couronne dentée (17) au moment de la fabrication.

11. Engrenage à vis sans fin (11) pour une direction de véhicule automobile, comprenant une roue à vis sans fin (12) selon l'une quelconque des revendications 1 à 10 et une vis sans fin (13) en prise avec la roue à vis sans fin (12).

12. Procédé de fabrication d'une roue à vis sans fin (12) pour un engrenage à vis sans fin (11) d'une direction de véhicule automobile (1), comprenant un moyeu (15), un corps de support (16) et une couronne dentée (17), le procédé présentant les étapes suivantes consistant à :
• fournir le moyeu (15) sous la forme d'une pièce d'insertion (150) ;
• poser la pièce d'insertion (150) dans la couronne dentée (17) ;
• injecter une matière plastique entre la couronne dentée (17) et la pièce d'insertion (150) au moyen d'un procédé de moulage par injection afin de réaliser le corps de support (16), notamment de telle sorte que le corps de support (16) sous forme de bague de support relie par complémentarité de forme le moyeu (15) et la couronne dentée (17), la couronne dentée (17) et le corps de support (16) réalisant une pluralité de dents (18) et le corps de support (16) présentant des nervures porteuses (164) qui traversent la couronne dentée (17) de sorte que les faces frontales (166), orientées radialement vers l'extérieur, des nervures porteuses (164) sont exposées.

13. Procédé selon la revendication 12, **caractérisée en ce que** la couronne dentée (17) est réalisée de telle sorte qu'à l'état durci, la bague de support (16) présente des contre-dépouilles qui permettent un calage de la bague de support (16) avec la couronne dentée (17) au moment de la fabrication.

14. Procédé selon la revendication 12 ou 13, **caractérisée en ce que** la couronne dentée (17) présente des éléments de dent (172) qui réalisent des flancs de dent (174) des dents (18).

15. Procédé selon la revendication 14, **caractérisée en ce qu'**un élément de dent (172) réalise respectivement un flanc de dent (174) de deux dents voisines.

16. Procédé selon la revendication 14 ou 15, **caractérisée en ce que** les nervures porteuses (164) du corps de support (16) sont disposées respectivement entre deux flancs d'une dent (18).

17. Procédé selon l'une quelconque des revendications précédentes 12 à 16, **caractérisée en ce que** les nervures porteuses (164) s'étendent sur toute la largeur (d) de la roue à vis sans fin (12) dans la zone des dents.

18. Procédé selon l'une quelconque des revendications précédentes 12 à 17, **caractérisée en ce que** les nervures porteuses (164) présentent une largeur (b) constante.
